# EUROPEAN PATENT SPECIFICATION

(11) **EP 4 391 154 B1**
(45) Date of publication and mention of the grant of the patent: **08.04.2026**
(21) Application number: 23743551.6
(22) Date of filing: 20.01.2023
(51) Int. Cl.: H01M 10/613, H01M 50/242, H01M 50/204, H01M 50/211, H01M 10/6557, H01M 10/656, H01M 10/647, H01M 10/052, H01M 10/625, H01M 10/653, H01M 10/6556, H01M 50/209, H01M 10/04, H01M 10/6554, H01M 10/6568, H01M 50/289, H01M 10/6567

(54) **BATTERY MODULE AND MANUFACTURING METHOD OF THE SAME**
BATTERIEMODUL UND HERSTELLUNGSVERFAHREN DESSELBEN
MODULE DE BATTERIE ET PROCÉDÉ DE FABRICATION DE CELUI-CI

(30) Priority: 21.01.2022 KR 20220009058; 19.01.2023 KR 20230008310
(43) Date of publication of application: 26.06.2024
(73) Proprietor: LG Energy Solution, Ltd., Seoul 07335 (KR)
(72) Inventor: KIM, Dongwook, Daejeon 34122 (KR); KIM, Yongil, Daejeon 34122 (KR); NOH, Yuhan, Daejeon 34122 (KR)
(74) Representative: Plasseraud IP
(86) International application number: PCT/KR2023/001069
(87) International publication number: WO 2023/140708

(56) References cited:
- EP-A1- 3 940 874
- EP-A1- 4 037 079
- WO-A1-2022/014966
- JP-A- 2012 114 030
- JP-A- 2018 106 930
- KR-A- 20200 068 479
- KR-A- 20210 122 112
- KR-B1- 101 181 303
- US-A1- 2017 133 705
- US-A1- 2020 168 959
- US-A1- 2020 373 634

## Description

### [TECHNICAL FIELD]

The present disclosure relates to a battery module and a manufacturing method of the same, and more particularly, to a battery module capable of controlling the swelling of battery cells and a manufacturing method of the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which seals and accommodates the electrode assembly together with an electrolyte solution.

Generally, the lithium secondary battery may be classified into a can-type secondary battery in which the electrode assembly is mounted in a metal can, and a pouch type secondary battery in which the electrode assembly is mounted in a pouch of an aluminum laminate sheet, depending on the shape of the exterior material.

Recently, secondary batteries are widely used not only for small-sized devices such as cellular phones but also middle-sized or large-sized devices such as vehicles and energy storage systems. For the purpose of applying to such middle-sized or large-sized devices, a great number of secondary batteries may be electrically connected to enhance capacity and output. At this time, pouch-type secondary batteries tends to be more widely used due to advantages such as being easily stacked and having a light weight.

A pouch-type secondary battery may be generally manufactured through a process of injecting an electrolyte solution in a state in which an electrode assembly is accommodated in a pouch exterior part, and sealing the pouch exterior part.

A secondary battery may generate gas inside due to deterioration or the like as charge/discharge is repeated. And, when gas is generated from the inside in this way, the internal pressure increases, which may cause a swelling phenomenon in which pressure resistance increases and at least a part of the exterior part swells. In particular, in the case of the pouch-type secondary batteries, the structural stiffness of the exterior part is weaker than that of the can-type secondary battery, so that the swelling phenomenon may occur more severely.

Conventionally, battery cells are accommodated in a module case, and foam-shaped pads are disposed, so that the module case does not restrict the battery cells excessively, and the pad absorbs swelling of the battery cells.

When the swelling phenomenon of the battery cell occurs to a large extent, the pressure inside the battery increases and the volume increases, which may adversely affect the structural stability of the battery module. Moreover, a battery module often includes a plurality of secondary batteries. In particular, in the case of middle-sized or large-sized battery modules used in automobiles, energy storage systems (ESS), etc., a large number of secondary batteries can be included and interconnected for high output or high capacity. At this time, even if the volume of each secondary battery increases little by little due to swelling, the volume change of each secondary battery is accumulated to the battery module as a whole, and the degree of deformation may reach a serious level. In particular, the module frame accommodating a plurality of secondary batteries may be deformed, or the welded portion of the module frame may be broken. That is, the volume expansion phenomenon due to the swelling of each secondary battery may reduce the overall structural stability of the battery module. In addition, when the swelling force greatly increases while charge/discharge is repeated, the separator in the battery cell may be compressed, thereby partially degrading battery performance.

Therefore, there is a need to develop a method capable of absorbing the expansion displacement during swelling of the battery cell and applying an appropriate pressing force to the battery cell.

Document US 2020/168959 A1 discloses a battery module comprising stacked battery cells and a compressible element placed in a module frame.

Document EP 4037079 A1 discloses a battery module comprising stacked battery cells and a tube wherein a fluid is injected, placed in a module frame. This document is part of the prior art according to Article 54(3) EPC.

### [DETAILED DESCRIPTION OF THE INVENTION]

### [Technical Problem]

It is an object of the present disclosure to provide a battery module capable of absorbing expansion displacement due to swelling of the battery cell and applying an appropriate pressing force to the battery cell so that the battery cells can exhibit optimal performance, and a manufacturing method of the same.

### [Technical Solution]

To this end, the invention relates to a battery module according to claim 1.

The battery module after the invention may present one or more feature(s) of dependent claims 2 to 8, in any combination allowed by the claims.

The invention also relates to a method for manufacturing a battery module, according to claims 9 to 13.

### [Advantageous Effects]

According to the embodiments of the present disclosure, a tube into which the fluid flows is disposed inside the battery module, so that expansion displacement due to swelling of the battery cell can be effectively absorbed.

In addition, after the battery cells and tubes are disposed inside the battery module, fluid is injected into the tubes, so that appropriate initial pressing that enables battery cells to exhibit optimal performance can be applied, and damage to battery cells due to swelling can be minimized.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view of a battery module according to an embodiment of the present disclosure;
FIG. 2 is an exploded perspective view of the battery module of FIG. 1;
FIG. 3 is a plan showing one of the battery cells included in the battery module of FIG. 2;
FIG. 4 is a cross-sectional view showing a cross section taken along the cutting line A-A' of FIG. 1;
FIGS. 5(a) and (b) are partial views which enlarge and show a section "A" in FIG. 4;
FIGS. 6 and 7 are cross-sectional views of a battery module which explains a method of manufacturing a battery module according to an embodiment of the present disclosure;
FIG. 8 is a cross-sectional view showing a cross section of a battery module according to another embodiment of the present disclosure;
FIG. 9 is a partial cross-sectional view showing a cross section of a battery module including a check valve according to an example that is not part of the invention;
FIGS. 10 to 12 are graphs showing module stiffness curves of battery modules and P-D curves of battery cell stacks according to an embodiment of the present disclosure;
FIG. 13 is a graph showing the range of a module stiffness curve of a battery module according to an embodiment of the present disclosure;
FIG. 14 is a graph showing a P-D curve for a single battery cell;
FIG. 15 is a graph showing a P-D curve of a single battery cell and a P-D curve of a battery cell stack; and
FIG. 16 is a graph showing module stiffness curves of Examples 1 to 4 according to the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

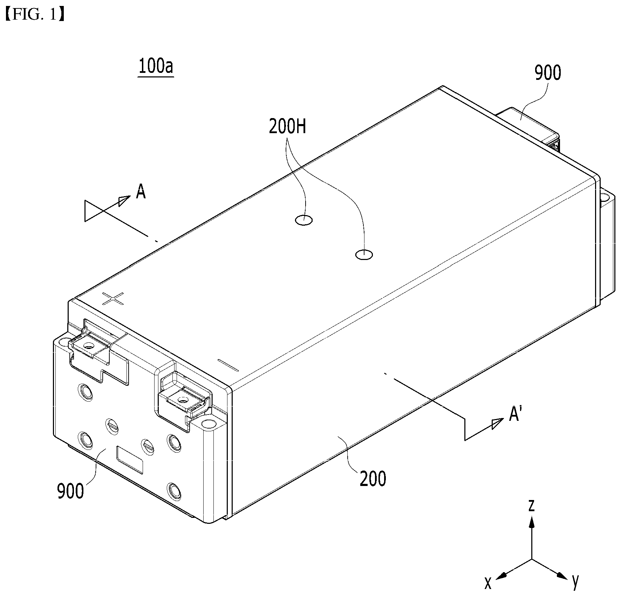

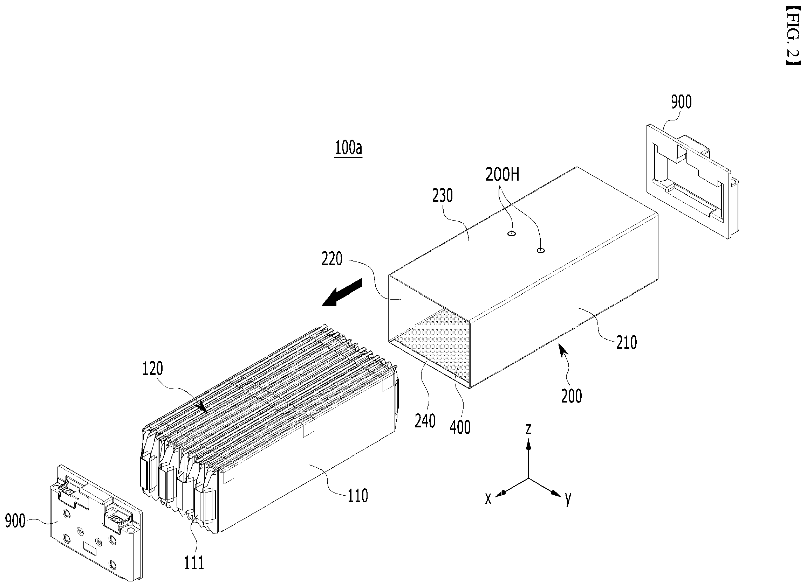

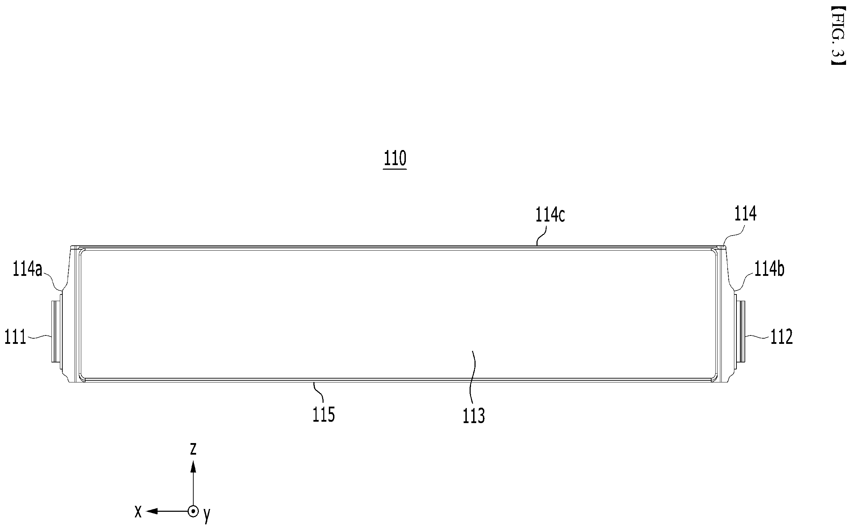

FIG. 1 is a perspective view of a battery module according to an embodiment of the present disclosure. FIG. 2 is an exploded perspective view of the battery module of FIG. 1. FIG. 3 is a plan view showing one of the battery cells included in the battery module of FIG. 2.

Referring to FIGS. 1 to 3, the battery module 100a according to an embodiment of the present disclosure includes a battery cell stack 120 in which a plurality of battery cells 110 are stacked in one direction, a module frame 200 that accommodates the battery cell stack 120 therein, and a tube 300 that is stacked on one side of the battery cell 110 in the battery cell stack 120.

This battery cell 110 is a pouch-type battery cell, and can be formed by accommodating an electrode assembly in a pouch case of a laminate sheet including a resin layer and a metal layer, and then adhering the outer periphery of the pouch case. Specifically, the battery cell 110 has a structure in which two electrode leads 111 and 112 face each other and protrude from one end 114a and the other end 114b of the cell main body 113, respectively. The battery cell 110 can be produced by joining both ends 114a and 114b of a cell case 114 and one side portion 114c connecting them in a state in which an electrode assembly (not shown) is accommodated in a cell case 114. In other words, the battery cell 110 according to the present embodiment has a total of three sealing parts, the sealing parts have a structure that is sealed by a method such as fusion, and the remaining other side part may be composed of a folding part 115. The battery cell 110 according to this embodiment may be a pouch-type battery cell configured to accommodate an electrode assembly inside the pouch case 114 and seal the outer periphery of the pouch case 114. The battery cell 110 described above is an illustrative structure, and it goes without saying that a unidirectional battery cell in which the two electrode leads protrude in the same direction can be used.

Such battery cells 110 are stacked along one direction to form a battery cell stack 120. As an example, the battery cells 110 may be stacked along a direction parallel to the y-axis, while facing one surface of the battery body 113.

The module frame 200 according to the present embodiment is a member that accommodates the battery cell stack 120 therein, and may include a first side surface part 210, a second side surface part 220, an upper surface part 230 and a lower surface part 240. Further, one side (x-axis direction) and the other side (-x-axis direction) of the module frame 200 may be opened, and the battery cell stack 120 may be accommodated through the opened one side or the other side. The module frame 200 may include a metal material having a predetermined strength to protect internal electrical components.

The module frame 200 shown in FIG. 2 may be a mono frame in which a first side surface part 210, a second side surface part 220, an upper surface part 230, and a lower surface part 240 are integrated. That is, it is manufactured by extrusion molding, so that the first side surface part 210, the second side surface part 220, the upper surface part 230, and the lower surface part 240 can be integrated. Although not specifically shown, in another embodiment of the present disclosure, a module frame in which a U-shaped frame and an upper plate are welded to each other can also be used.

Meanwhile, the battery module 100a according to the present embodiment may further include end plates 900 located on one open side and the other open side of the module frame 200 , respectively. The end plates 900 may be located on the one open side and the other side of the module frame 200 so as to cover the battery cell stack 120. Edges of each end plate 900 may be joined with the corresponding edges of the module frame 200 by means of welding. The end plates 900 may include a metal material having a predetermined strength, and can protect the battery cell stack 120 and other electrical components from external impacts.

Although not specifically shown, a busbar frame and an insulating cover may be located between the end plate 900 and the battery cell stack 120. The busbar frame is configured to mount a busbar for connecting the electrode leads 111 and 112 of each battery cell 110 to each other, and the insulating cover is configured to include a material that exhibits electrical insulation and thus cut off electrical connection between the battery cells 110 and the end plate 900. Within the battery cell stack 120, the battery cells 110 may be electrically connected in series or parallel via a busbar.

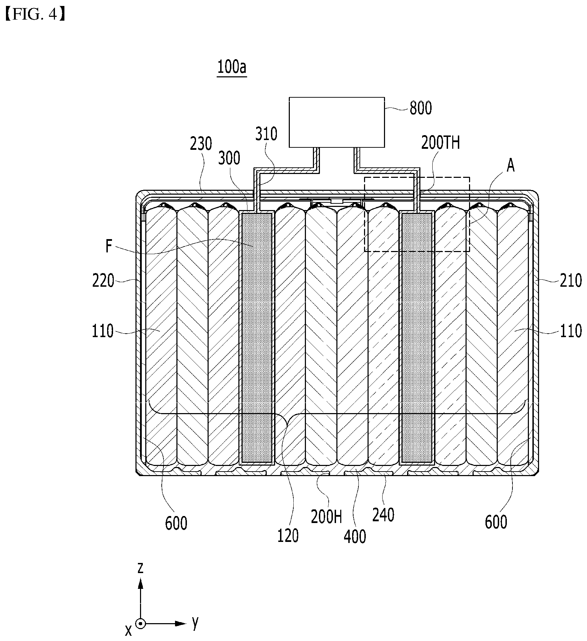

Next, the tube 300 according to the present embodiment will be described in detail with reference to FIG. 4 and the like.

FIG. 4 is a cross-sectional view showing a cross section taken along the cutting line A-A' of FIG. 1.

Referring to FIGS. 1 to 4 together, the battery module 100a includes a tube 300 stacked on one side of the battery cell 110 in the battery cell stack 120.

The tube 300 may have a flat shape so that it can support the battery body 113 of the battery cell 110, and may be stacked on one side of the battery cell 110 so as to cover the battery body 113 of the battery cell 110. That is, the tube 300 may be located between the battery cells 110 or located outside the battery cell 110 disposed on the outermost side. The number of the tubes 300 is not particularly limited, and a single tube or a plurality of tubes can be disposed in the battery module 100a.

A fluid F may flow into the inside of the tube 300. The tube 300 may be made of a soft or elastic material. The tube 300 may have a structure formed of a rubber material. The tube 300 is formed of an elastic rubber material, which can enhance the effect of dispersing the pressure between the battery cells 110. Further, the tube 300 may be a flat-shaped tube so that it can be stacked on one side of the battery cell 110.

Meanwhile, the fluid F flowing into the tube 300 may be in a liquid or gel state. For example, the fluid F may be cooling water or water. Cooling water or water is filled in the tube, thereby capable of achieving a cooling effect for the battery cell. In addition, when the fluid (F) is a hydrogel, this is advantageous for distributing stress concentrated in a specific region and maintaining thermal equilibrium, and can minimize the weight increase of the battery module. On the contrary, it is possible to assume that gas is used as a fluid, but when gas is used as the fluid, there may be a problem that the heated gas raises the temperature of the battery cell 110 as a whole.

The battery module 100a according to the present embodiment is configured such that a tube 300 into which a fluid F flows is provided inside, which can thus apply a constant force to the plurality of battery cells 110, and absorb the expansion displacement due to swelling of the battery cell. Since this is a control method using the fluid F, the surface pressure of the battery cell 110 can be maintained constant even if swelling of the battery cell 110 occurs.

Meanwhile, a through hole 200TH is formed in the module frame 200. As an example, a through hole 200TH may be formed in the upper surface part 230 of the module frame 200. The tube 300 includes an injection part 310 connected to an external fluid supply device 800 through a through hole 200TH, and a fluid F flows into the tube 300 from the fluid supply device 800 through the injection unit 310.

The method of providing the injection part 310 is not particularly limited. As an example, after the battery cell stack 120 including the tube 300 is accommodated in the module frame 200, the injection part 310 integrated with the main body of the tube 300 can be exposed to the outside via the through hole 200TH to connect to the fluid supply device 800. As another example, the injection part 310 is inserted via the through hole 200TH, so that the injection part 310 can be connected so as to communicates with the inside of the tube 300 whose outer periphery is sealed.

By adjusting the pressure and amount of the fluid F flowing in from the fluid supply device 800, an appropriate initial pressing may be applied to the battery cell 110 in which the battery cell 110 can exhibit optimal performance.

As an example, the fluid supply device 800 is a device for supplying the fluid F into the tube 300 and may be a conventional fluid pump or a device using a pressure head.

In another embodiment, the fluid supply device 800 using the pressure head includes a fluid supply tube fluidly connected to the tube 300. At this time, the fluid supply tube is located at a higher position than the injection part 310 of the tube 300 and has a structure perpendicular to the ground.

In addition, the height of the fluid in the fluid supply tube can be adjusted to determine the amount of fluid F flowing into the tube, thereby controlling the pressure of the tube. In such a case, the fluid supply device may apply fluid pressure to the tube without the need for a separate power source.

The battery module 100a may further include a heat transfer member located between the battery cell stack 120 and one surface of the module frame 200. The heat transfer member according to the present embodiment may include a thermal resin layer 400. One surface of the module frame 200 may mean one of the walls constituting the module frame 200, that is, one of the first side surface part 210, the second side surface part 220, the upper surface part 230 and the lower surface part 240.

As an example, a thermal resin layer 400 as a heat transfer member may be located between the battery cell stack 120 and the lower surface part 240 of the module frame 200.

One side of the battery cells 110 may be adhered to the thermal resin layer 400. Specifically, the thermal resin layer 400 may be formed by injecting or applying a thermal resin and then curing the same. The thermal resin may include a thermally conductive adhesive material, and specifically, may include at least one of a silicone material, a urethane material, or an acrylic material. The thermal resin may be in a liquid state during application, but may be cured after application to be adhered to one side of the battery cell 110. Thereby, the thermal resin layer 400 may serve to fix the battery cells 110. In addition, the thermal resin layer 400 has excellent heat conduction properties, and can quickly transfer heat generated in the battery cell 110 to the lower side of the battery module.

An injection hole 200H may be formed on the one surface of the module frame 200. As an example, an injection hole 200H may be formed in the lower surface part 240 of the module frame 200. The thermal resin layer 400 may be formed by injecting the thermal resin through the injection hole 200H.

In particular, in the case of the battery module 100a according to the present embodiment, the battery cell laminate 120 is accommodated in the module frame 200 in a state in which the tube 300 is empty, and the fluid F can be supplied to the tube 300 after completion of the accommodation.

In the case of a conventional battery module, foam-shaped pads are disposed between battery cells, and such battery cells are accommodated in a module frame in a pressed state. In order to apply a predetermined pressing force to the battery cells, the battery cells are accommodated in the module frame while being strongly pressed. When the thickness of the battery cell is large, a large pressing force is required during accommodation, which may cause problems such as damage to the pouch case of the battery cell.

Unlike the conventional battery module, the battery module 100a according to the present embodiment can minimize the possibility of battery cells 100 being damaged during the accommodation process because the battery cell stack 120 having the tube 300 of which inside is empty, is accommodated in the module frame 200. Since it is sufficient to press the battery cells 110 by injecting the fluid F into the tubes 300 after accommodation, there is no need to strongly press the battery cells 110 during the accommodation process. Therefore, the possibility of damage to the battery cell 110 can be reduced.

Further, according to the present embodiment, after the initial pressing of the battery cell 110 is completed by injecting a fluid into the tube 300, a thermal resin can be injected through the injection hole 200H to form a thermal resin layer 400. As mentioned above, since thermal resin has adhesive properties, the cured thermal resin layer 400 is in a state of being adhered to one side of the battery cell 110. Therefore, in the present embodiment, the thermal resin layer 400 is formed after completion of the initial pressing, and thus, even if swelling of the battery cells 110 occurs, damage to the adhesive portion between the battery cells 110 and the thermal resin layer 400 can be reduced.

Taken together, the battery module 100a according to this embodiment adjusts the process of injecting the fluid F into the tube 300 and the process of injecting the thermal resin into the module frame 200, thereby attempting to minimize the occurrence of damage during the process of accommodating the battery cell 110 and the subsequent process of swelling of the battery cell 110. Further, by adjusting the pressure and amount of the fluid (F) flowing into the tube 300, the pressing force applied to the battery cell 110 can be maintained in an optimum state. Further, in the case of an all-solid-state battery or a pure Si battery, the performance of the battery cell is well exhibited when the initial pressing force is high. In order to increase the initial pressing force, a pressing means using a fluid can be used as in the present embodiment. In addition, as will be described later, even if the battery cell expands, the pressure can be relieved without continuously increasing the pressing force while the fluid coming out of the tube. Therefore, deformation of the battery module can be alleviated, and thus, the risk of structural damage can be reduced.

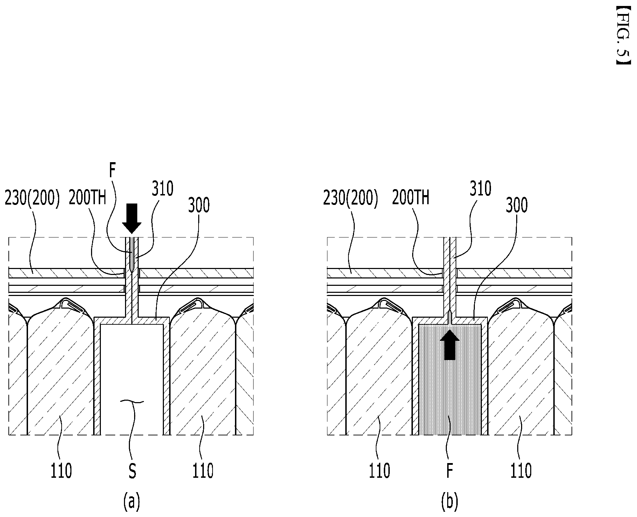

FIGS. 5(a) and (b) are partial views which enlarge and show a section "A" in FIG. 4. FIG. 5(a) simulates a state in which the fluid F flows into the tube 300, and FIG. 5(b) simulates a state in which the pressure of the tube 300 reaches a certain level and the internal fluid F is gradually discharged.

Referring to FIGS. 5(a) and (b), the injection part 310 of the tube 300 has a closed fine hole shape, and when the fluid F receives pressure, the injection part 310 having a micro-hole shape is opened so that the fluid F can flow into the tube 300 or the flowing-in fluid F can be discharged from the tube 300.

First, referring to FIG. 5(a), when the fluid supply device 800 (see FIG. 4) applies pressure to the fluid F using the above-mentioned fluid pump or pressure head, the injection part 310 having a micro-hole shape is opened so that the fluid F can flow into an empty space S of the tube 300.

Meanwhile, referring to FIG. 5(b), when swelling occurs in a charge and discharge process of the battery cells 110 and the battery cells 110 expand, pressure is applied to the tube 300. When the pressure applied to the tube 300 and the fluid F therein exceeds a predetermined value, the injection part 310 having a micro-hole shape is opened so that the fluid F can be discharged from the tube 300. That is, the fluid F in the tube 300 can be gradually discharged during the swelling of the battery cell 110. Thereby, an increase in pressure due to deterioration of the battery module 100a is prevented, and excessive pressure applied to the battery cell 110 is relieved, so that the pressure applied to the battery cell 110 can be maintained in an optimal state. That is, even if the battery cell 110 expands, the pressure on the battery cell 110 does not continue to increase while the fluid F coming out of the tube 300, and the pressure can be relieved. Therefore, deformation of the battery module can be alleviated, and the risk of structural damage can be reduced.

Meanwhile, referring to FIG. 4 again, the battery module 100a according to this embodiment may further include a compression pad 600 disposed adjacent to the battery cell 110. Specifically, the compression pad 600 may be disposed between the battery cells 110 or outside the battery cell 110 located on the outermost side. The compression pad 600 is a foam-shaped member, and can partially absorb expansion displacement during swelling of the battery cell 110. In this embodiment, since the tube 300 into which the fluid F flows is included, the number of compression pads 600 can be reduced compared to a conventional case.

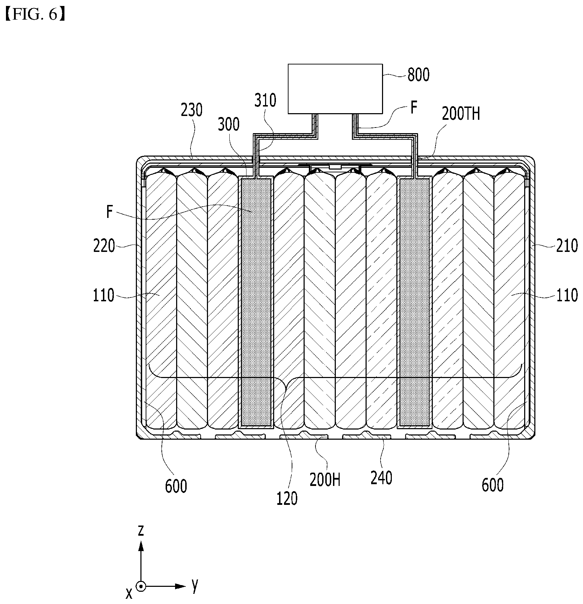

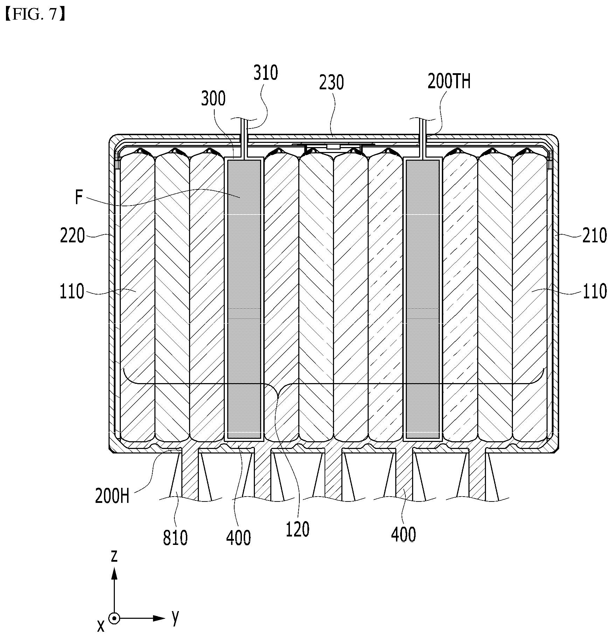

A method of manufacturing the battery module 100a according to an embodiment of the present disclosure will be described below with reference to FIGS. 6 and 7, and the like. However, the parts that overlap with the contents described above will be omitted.

FIGS. 6 and 7 are cross-sectional views of a battery module which explains a method of manufacturing a battery module according to an embodiment of the present disclosure.

Referring to FIGS. 2 and 6, a method of manufacturing a battery module 100a according to an embodiment of the present disclosure includes an assembly step of accommodating a battery cell stack 120 in which a plurality of battery cells 110 are stacked, and a tube 300 that is stacked on one side of the battery cell 110 within the battery cell stack 120 and of which inside is empty, in the inside of the module frame 200, and an initial pressing step of injecting a fluid into the inside of the tube 300 to press the battery cells 110.

In the assembly step, end plates 900 are located on the opened one side and the other side of the module frame 200 so as to cover the battery cell stack 120, and the corresponding edges of the end plates 900 and the module frame can be welded.

Meanwhile, as described above, the tube 300 may be located between the battery cells 110 or located outside the battery cell 110 disposed on the outermost side. In the assembly step, the tube 300 is in a state where the inside is empty, without being filled with fluid.

A through hole 200TH is formed in the module frame 200, and the tube 300 includes an injection part 310 connected to an external fluid supply device 800 via the through hole 200TH. The specific configuration of the fluid supply device 800 or the connection shape between the tube 300 and the fluid supply device 800 overlaps with the contents described above, and thus, a detailed description thereof will be omitted.

As shown in FIG. 6, in the initial pressing step, the fluid supply device 800 injects a fluid F into the inside of the tube 300 via the injection part 310. The initial pressing step may be performed after the assembly step. That is, according to the present embodiment, in manufacturing the battery module 100a, since it is sufficient to press the battery cell 110 by injecting the fluid F into the tube 300 after completion of the assembly step, there is no need to strongly press the battery cells 110 in the assembly step. Therefore, the possibility of damage to the battery cell 110 can be reduced.

Next, referring to FIG. 7, the manufacturing method of the battery module 100a according to the present embodiment may further include a resin injection step of injecting a thermal resin between the battery cell stack 120 and one surface of the module frame 200 to form a thermal resin layer 400.

More specifically, an injection hole 200H is formed on the one surface of the module frame 200, and in the resin injection step, the thermal resin may be injected through the injection hole 200H.

As an example, an injection hole 200H is formed in the lower surface part 240 of the module frame 200, and the thermal resin may be injected between the battery cell stack 120 and the lower surface part 240 of the module frame 200. The injection device 810 may inject a thermal resin between the battery cell stack 120 and the lower surface portion 240 of the module frame 200 through the injection hole 200H.

The injected thermal resin can be cured to form a thermal resin layer 400. The thermal resin may include a thermally conductive adhesive material, and may adhere to one side of the battery cells 110 while being cured.

At this time, the resin injection step may be performed after the initial pressing step. In the present embodiment, the resin injection step is performed after completion of the initial pressing step, and thus, even if swelling of the battery cells 110 occurs, damage to the adhesion between the battery cells 110 and the thermal resin layer 400 can be reduced.

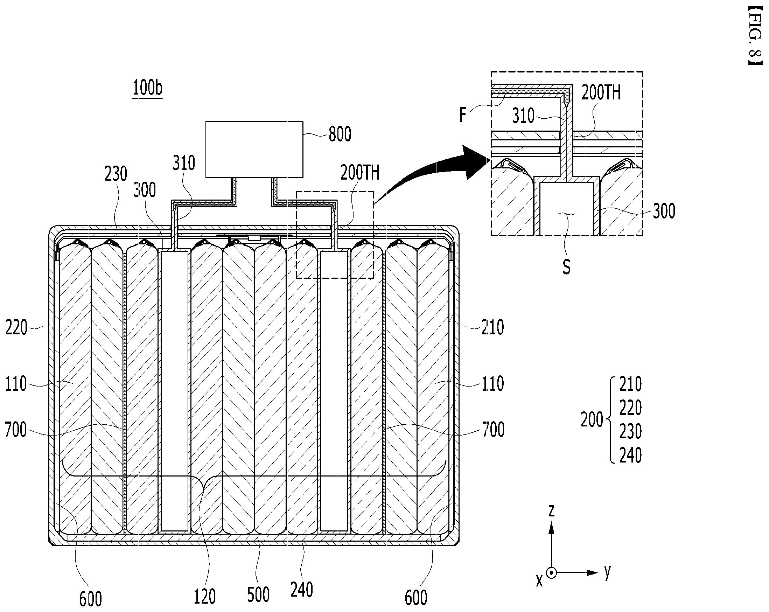

Next, a battery module 100b according to another embodiment of the present disclosure and a manufacturing method thereof will be described in detail with reference to FIG. 8. However, the parts that overlap with the contents described above will be omitted.

FIG. 8 is a cross-sectional view showing a cross section of a battery module according to another embodiment of the present disclosure.

Referring to FIG. 8, the battery module 100b according to another embodiment of the present disclosure includes a battery cell stack 120 in which a plurality of battery cells 110 are stacked in one direction, a module frame 200 that accommodates the battery cell stack 120 therein, and a tube 300 that is stacked on one side of the battery cell 110 in the battery cell stack 120. A through hole 200TH is formed in the module frame 200, and the tube 300 includes an injection part 310 connected to an external fluid supply device 800 via a through hole 200TH. The fluid F flows into the inside of the tube 300 from the fluid supply device 800 via the injection part 310.

At this time, the battery module 100b may further include a heat transfer member located between the battery cell stack 120 and one surface of the module frame 200. The heat transfer member according to the present embodiment may include a thermal pad 500. One surface of the module frame 200 may mean one of the walls constituting the module frame 200, that is, one of the first side surface part 210, the second side surface part 220, the upper surface part 230 and the lower surface part 240.

As an example, a thermal pad 500 as a heat transfer member may be located between the battery cell stack 120 and the lower surface part 240 of the module frame 200.

One side of the battery cells 110 is in contact with the thermal pad 500, with the battery cells 110 are slidable on the thermal pad 500 in the stacking direction of the battery cells 110. The thermal pad 500 has no adhesive properties, unlike the thermal resin layer 400 described above. Therefore, even if one side of the battery cells 110 is in contact with the thermal pad 500, the battery cells 110 are not in a state of being adhered and fixed to the thermal pad 500.

The thermal pad 500 may include a material having high thermal conductivity, and may have a flat pad shape. One surface of the thermal pad 500 is disposed parallel to the stacking direction of the battery cells 110, so that one side of each battery cell 110 can contact the thermal pad 500. Such a thermal pad 500 may include a silicon material or an acrylic material having good thermal conductivity. Heat generated in the battery cells 110 may be dissipated to the outside through the thermal pad 500 on one side of the battery cell 110.

Even if swelling of the battery cells 110 occurs, the battery cells 110 are in a state of being not adhered to the thermal pad 500, and thus, the battery cells 110 can slide in the stacking direction of the battery cells 110. That is, in FIG. 8, the battery cells 110 can slide relatively freely in a direction parallel to the y-axis, which is the stacking direction of the battery cells 110.

Thereby, damage to the battery cells 110 can be prevented even if swelling occurs, and not only the pressure deviation between the battery cells 110 but also the pressure deviation within the battery cells 110 can be reduced.

In particular, even if the fluid F flows into the tube 300 after the battery cell stack 120 is disposed inside the module frame 200, the battery cells 110 are not restricted by the thermal pad 500 and thus, the variation in pressing force generated in the battery cells 110 can be minimized.

Meanwhile, the battery module 100b according to the present embodiment may further include at least one of a compression pad 600 and a cooling plate 700 disposed adjacent to the battery cell 110.

Specifically, a compression pad 600 or a cooling plate 700 may be disposed between the battery cells 110 or outside the battery cell 110 located on the outermost side. The compression pad 600 is a foam-shaped member, and can partially absorb expansion displacement during swelling of the battery cell 110. Since this embodiment includes the tube 300 into which the fluid F flows, the number of compression pads 600 can be reduced compared to a conventional case.

The cooling plate 700 may be disposed so as to cover the battery body 113 of the battery cell 110 (see FIG. 3). The cooling plate 700 may include a material with high thermal conductivity and may include a metal material. As an example, the cooling plate 700 may be a thin aluminum plate. One end of such a cooling plate 700 may contact the thermal pad 500 .

Since the cooling plate 700 covers the battery body 113 (see FIG. 3) of the battery cell 110, surface cooling of the battery cell 110 is made possible. In other words, the cooling plate 700 is disposed by complementing the thermal pad 500 that enables only edge cooling for the battery cell 110, thereby capable of complementing the cooling performance for the battery module 100b.

A method of manufacturing the battery module 100b according to an embodiment of the present disclosure will be described below. However, the parts that overlap with the contents described above will be omitted.

Referring to FIG. 8, the manufacturing method of the battery module 100b according to an embodiment of the present disclosure includes an assembly step of accommodating a battery cell stack 120 in which a plurality of battery cells 110 are stacked, and a tube that is stacked on one side of the battery cell 110 in the battery cell stack 120 and of which inside is empty, in the inside of the module frame 200, and an initial pressing step of injecting a fluid F into the inside of the tube 300 to press the battery cells 110.

A through hole 200TH is formed in the module frame 200, and the tube 300 includes an injection part 310 connected to an external fluid supply device 800 via the through hole 200TH. In the initial pressurization step, the fluid supply device 800 injects a fluid F into the tube 300 via the injection part 310.

At this time, in the assembly step, the thermal pad 500 may be accommodated inside the module frame 200. The thermal pad 500 may be located between one surface of the battery cell stack 120 and the module frame 200. As an example, the thermal pad 500 may be located between the battery cell stack 120 and the lower surface part 240 of the module frame 200.

When the battery cell stack 120 including the tube 300 is accommodated inside the module frame 200, the thermal pad 500 may also be accommodated inside the module frame 200. Unlike the battery module 100a in which thermal resin is injected, the thermal pad 500 is accommodated, and thus, an injection hole does not need to be formed on one surface of the module frame 200.

As described above, one side of the battery cells 110 is in contact with the thermal pad 500, wherein the battery cells 110 are slidable on the thermal pad 500 in the stacking direction of the battery cells 110. The details concerning overlap with the contents previously described, and thus, are omitted.

Since a thermal pad 500 that contacts the battery cell but does not adhere to it is disposed, it is possible to prevent the battery cell 110 from being damaged even if even if the initial pressing step is performed or swelling of the battery cell 110 occurs subsequently. Moreover, both the pressure deviation between the battery cells 110 and the pressure deviation within the battery cell 110 can be reduced.

A battery module including a check valve according to another embodiment of the present disclosure will be described below.

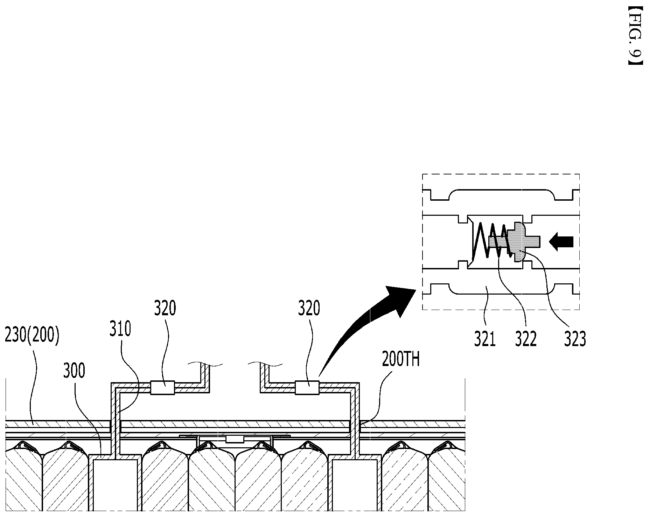

FIG. 9 is a partial cross-sectional view showing a cross section of a battery module including a check valve according to an example that is not part of the invention.

Referring to FIG. 9, the battery module according to the present embodiment may include a tube 300 stacked on one side of a battery cell in a battery cell stack.

The battery module according to the present embodiment may further include a check valve 320 connected to the tube 300. As an example, the tube 300 may be connected to an external device (not shown) through a through hole 200TH formed in the upper surface part 230 of the module frame 200. A check valve 320 may be provided in a path where the tube 300 is connected to an external device (not shown). Although the check valve 320 is shown as being located outside the module frame 200, it can also be located inside the module frame 200.

The check valve 320 is a valve that allows fluid to flow in only one direction and not to flow in the opposite direction. As an example, the check valve 320 may include a body tube 321, a spring 322 and a valve disc 323. When the pressure of the fluid inside the tube 300 increases, the valve disc 323 opens while the spring 322 is compressed. Thereby, the fluid may be discharged from the tube 300. However, this shows one example of the check valve 320, and any configuration that allows fluid to flow in only one direction according to an increase in internal fluid pressure can be applied without limitation.

When swelling occurs and the battery cell 110 expands, pressure is applied to the tube 300. When the pressure applied to the tube 300 and the fluid therein exceeds a predetermined value, the check valve 320 is opened and fluid can be discharged from tube 300. That is, the fluid in tube 300 can be gradually discharged during swelling of the battery cell. Even when the battery cell expands, the pressure on the battery cell 110 does not continue to increase while the fluid coming out of the tube 300, and the pressure can be relieved. Therefore, deformation of the battery module can be alleviated, thereby reducing the risk of structural damage.

Meanwhile, the battery cell according to this embodiment may be a battery cell containing pure Si. In order for such a battery cell to exhibit its performance smoothly, the initial pressing force should be 10 times or more that of the existing battery cell. Similarly to the battery module according to the present embodiment, the pressing method through the tube 300 into which the fluid F is injected can constantly apply a high pressurizing force so that the battery cell containing pure Si can exhibit optimal performance. That is, the battery module according to this embodiment has a structure suitable for use in a battery cell containing pure Si.

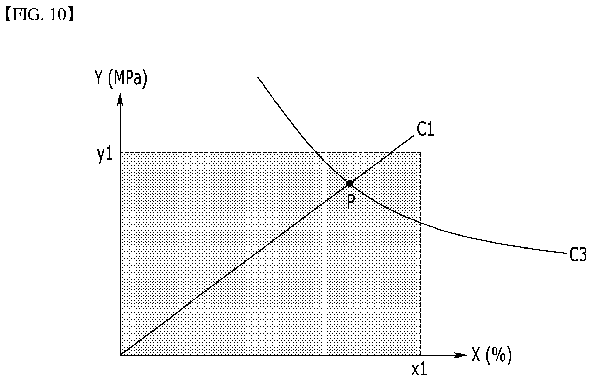

A design method of the battery module according to the present embodiment will be described below with reference to FIGS. 10 to 16.

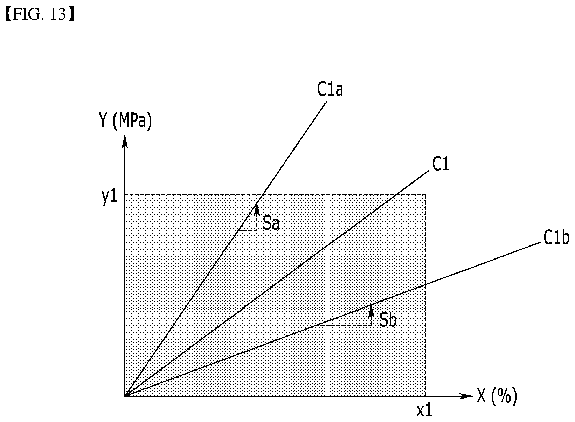

FIGS. 10 to 12 are graphs showing module stiffness curves of battery modules and P-D curves of battery cell stacks according to an embodiment of the present disclosure. FIG. 13 is a graph showing the range of a module stiffness curve of a battery module according to an embodiment of the present disclosure.

Referring to FIGS. 2, 4, and 10 to 13 together, in the battery module 100a according to an embodiment of the present disclosure, a battery cell stack 120 in which battery cells 110 are stacked may be accommodated in the module frame 200. Within the battery module, the battery cells 110 may be stacked along one direction from the side surface part 210 of the module frame 200 to the other side surface part 220. Further, a compression pad 600 may be interposed at least at one place between adjacent battery cells 110 or between the outermost battery cell 110 and the side surfaces parts 210 and 220 of the module frame 200 .

At this time, the module stiffness curve C1 caused by the module frame 200 and the P-D (pressure-displacement) curve C3 of the battery cell stack 120 showing the swelling characteristics of the battery cells 110 are calculated, respectively, and they are fitted into one graph. Then, the swelling behavior of the battery module can be predicted by a method of finding an equilibrium point (intersection point) between the two curves.

FIGS. 10 to 12 show intersections P, P' and P" between the module stiffness curves C1, C1' and C" and the P-D curve C3 of the battery cell stack. The P-D curve C3 of the battery cell stack is a graph showing the relationship between the surface pressure that the battery cell 110 receives according to the degree of change when the thickness of the battery cell 110 changes due to the swelling of the battery cell 110. The P-D curve C3 of the battery cell stack may be measured in an EOL (End of Life) state of the battery cells 110. Here, EOL refers to the state when the ratio of the current capacity of the battery to the initial capacity of the battery reaches a predetermined ratio, and the ratio may be 80%. In other words, EOL may refer to the battery state when the capacity of the battery reaches 80% of the initial value, and may correspond to a state in which the lifespan of the corresponding battery has expired or replacement is required. Meanwhile, the module stiffness curves C1, C1' and C" are graphs showing the relationship between the extent to which the width W of the module frame 200 changes according to the direction in which the battery cells 110 are stacked and the amount applied to the module frame 200. The direction in which the battery cells 110 are stacked corresponds to a direction from one side part 210 to the other side part 220 of the module frame 200, and the direction in which the battery cells 110 are stacked is hereinafter referred to as the width direction. Further, the widths W and W' of the module frame 200 means the distance from one side surface part 210 to the other side surface part 220. Each of the module stiffness curve C1 and the P-D curve C3 of the battery cell stack will be described in detail below.

In each of the module stiffness curves C1, C1' and C" and the P-D curve C3 of the battery cell stack, the X-axis corresponds to deformation ratio and the unit may be %. The Y-axis corresponds to the applied surface pressure and the unit may be MPa.

The intersection points P, P' and P" between the module stiffness curves C1, C1' and C" and the P-D curve C3 of the battery cell stack corresponds to the point where the behavior due to swelling of the battery cell stack 120 and the behavior due to deformation of the module frame 200 are balanced. In other words, in the case of a battery module in which a battery cell stack exhibiting a specific P-D curve C3 in an EOL (End of Life) state is accommodated in a module frame exhibiting a specific module stiffness curve C1, the corresponding battery module can be predicted to have deformation ratio and surface pressure corresponding to the intersection points P, P' and P" in the EOL state. That is, the battery module is deformed by the amount corresponding to the X-axis value of the intersection points P, P' and P" in the width direction in the EOL state, and the battery cells 110 and the module frame 200 receive surface pressure as much as the Y-axis value of the intersection points P, P' and P".

At this time, as shown in FIG. 10, the intersection point P is preferably located within the deformation limit point x1 and the pressure limit point y1. The deformation limit point x1 is 12%, and the pressure limit point y1 is 0.9 MPa. That is, it is preferable that the X-axis value of the intersection point P is 12% or less, which is the deformation limit point x1, and the Y-axis value of the corresponding intersection point P is 0.9 MPa or less, which is the pressure limit point y1. That is, the battery module according to the present embodiment may have the feature that in the EOL state, the deformation ratio in the direction in which the battery cells 110 are stacked is 12% or less, and the surface pressure applied to the battery cells 110 may be 0.9 MPa or less.

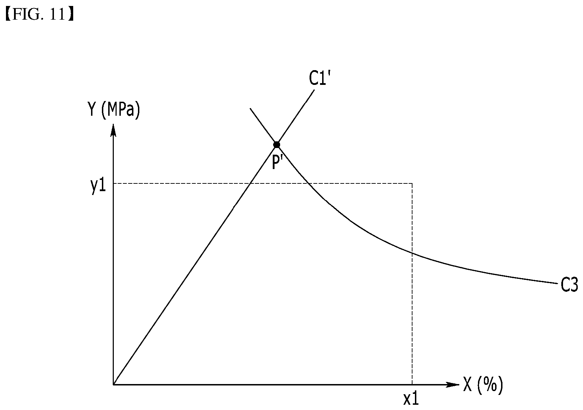

As shown in FIG. 11, when the Y-axis value of the intersection point P' exceeds the pressure limit point y1, it is predicted that in the EOL state, the surface pressure exceeding the pressure limit point y1 is applied to the battery cells 110 and the module frame 200 of the corresponding battery module. When a pressure exceeding 0.9 MPa, which is the pressure limit point y1, is applied to the battery cells 110, a problem of degradation of life performance of the battery cells 110, such as sudden drop, may occur. Further, when a pressure exceeding 0.9 MPa, which is the pressure limit point y1, is applied to the module frame 200, a surface pressure exceeding the yield strength can be applied so that the module frame 200 can be damaged and deformed.

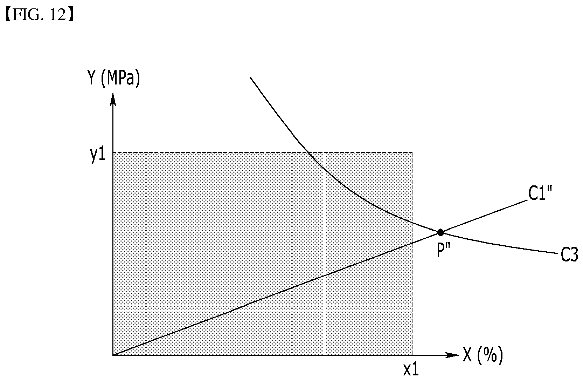

As shown in FIG. 12, when the X-axis value of the intersection point P" exceeds the deformation limit point x1, it is predicted that in the EOL state, the battery module will be deformed more than the deformation limit point x1 in the width direction. This means that the thickness change due to the expansion of the battery cells 110 is excessively allowed, which may cause problems such as disconnection between electrode leads and tabs in the battery cell 110 and cracks in the pouch-type battery case of the battery cell 110. In addition, since the battery module is predicted to be deformed more than the deformation limit point x1 of 12%, the space occupied by the battery module inside the battery pack is excessively increased, which causes the energy density of the battery module and the battery pack to decrease.

Meanwhile, referring to FIG. 13, in the case of the battery module according to the present embodiment, the module stiffness curve C1 can be calculated in a slope range of 0.00417 or more and 0.225 or less (MPa/%). That is, the module stiffness curve C1 of the battery module according to the present embodiment can be formed in the range between a lower limit module stiffness curve C1b having a slope Sb of 0.00417 MPa/% and an upper limit module stiffness curves C1a having a slope Sa of 0.225 MPa/%. In order for the intersection point (P) between the module stiffness curve C1 and the P-D curve C3 of the battery cell stack to be located within the range of the deformation limit point x1 and the pressure limit point y1, it is preferable that the module stiffness curve C1 is calculated in a slope (MPa/%) range of 0.00417 or more and 0.225 or less.

The module stiffness curve C1 will be specifically described below. As described above, the module stiffness curve C1 is a graph showing the relationship between the extent to which the width of the module frame 200 changes according to the direction in which the battery cells 110 are stacked and the load applied to the module frame 200. From the viewpoint of the module stiffness curve C1, the X axis corresponds to the deformation ratio % of the module frame 200 along the width direction. The deformation ratio may be calculated based on the width of the module frame 200 deformed along the width direction, relative to the width of the module frame 200 before deformation. For example, the deformation ratio may be calculated as the ratio of the extent to which the width of the module frame 200 is deformed relative to the width of the module frame 200 before deformation. From the viewpoint of the module stiffness curve C1, the Y-axis may correspond to the surface pressure (MPa) applied to the side surfaces 210 and 220 of the module frame 200 according to the deformation rate of the module frame 200.

In order to calculate the module stiffness curve C1, first, the frame stiffness curve may be calculated. The frame stiffness curve is a graph of the relationship between the deformation ratio of the module frame 200 and the surface pressure applied to the module frame 200. Such frame stiffness curves can be obtained through several actual tests or simulations. For example, an actual force is applied to the module frame 200 to measure the degree of deformation of the module frame 200 in the width direction. A frame stiffness curve can be derived by repeating the process while changing the applied force. A module stiffness curve C1 can be derived by considering the influence of the compression pad 600 on the frame stiffness curve. Specifically, the degree of compression of the compression pad 600 relative to the surface pressure applied to the compression pad 600 and the number of compression pads 600 can be reflected in the frame stiffness curve to finally derive the module stiffness curve C1.

Below, the P-D curve C3 of the battery cell stack will be described in detail. As described above, the P-D curve C3 of the battery cell stack is a graph showing the relationship of the surface pressure received by the battery cell 110 according to the degree of change when the thickness of the battery cell 110 changes due to swelling. From the viewpoint of the P-D curve C3 of the battery cell stack, the X axis may correspond to the deformation ratio (%) along the width direction of the battery cell stack 120, and the Y-axis may correspond to surface pressure (MPa) applied to the battery cells 110 included in the battery cell stack 120.

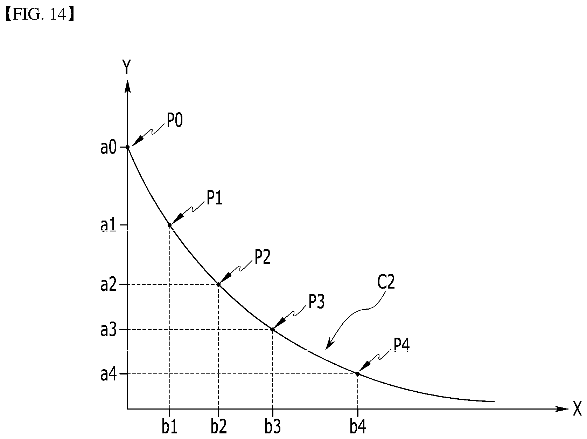

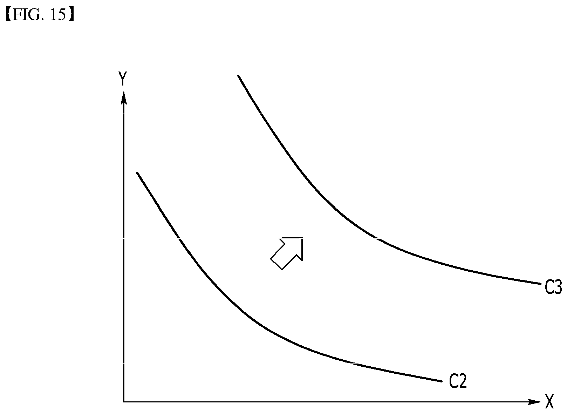

Below, the process of calculating the P-D curve C3 of the battery cell stack will be described in detail with reference to FIGS. 14 and 15.

FIG. 14 is a graph showing a P-D curve for a single battery cell.

Referring to FIG. 14, the thickness variation and surface pressure of a single battery cell 110 according to charge/discharge cycles may be measured. Specifically, a single battery cell 110 is located in a fixing jig in which thickness variation is limited, and then charge/discharge cycles are repeated. After that, the surface pressure value of a0 is measured through a load cell disposed in the corresponding fixing jig. The measured a0 is represented by P0 on the Y-axis. Next, a single battery cell 110 is located in a variable jig in which the thickness can be changed by a spring or the like, and then the charge/discharge cycles are repeated. Then, the surface pressure value of a1 is measured through the load cell disposed on the variable jig, and the increased thickness of the battery cell 110 is measured to calculate the thickness deformation ratio of b1. The corresponding a1 and b1 are denoted by point P1. The spring constant of the variable jig is changed and the measurement process is repeated to measure the surface pressure values of a2, a3, and a4 and the deformation ratio values of b2, b3, and b4, respectively. Based on such values, coordinate points P2, P3 and P4 can be displayed, and one curve C2 can be derived. And, the curve C2 thus derived corresponds to the P-D (pressure-displacement) curve of a single battery cell.

FIG. 15 is a graph showing a P-D curve of a single battery cell and a P-D curve of a battery cell stack.

Referring to FIGS. 14 and 15 together, the number of battery cells 110 included in the battery cell stack 120 can be reflected in the P-D curve C2 of a single battery cell obtained through the process described in FIG. 14 to obtain the P-D curve C3 of the battery cell stack 120. As the number of battery cells 110 increases, the surface pressure required according to the degree of deformation increases, so that the P-D curve C3 of the battery cell stack 120 is naturally located in the upper part compared to the P-D curve C2 of a single battery cell.

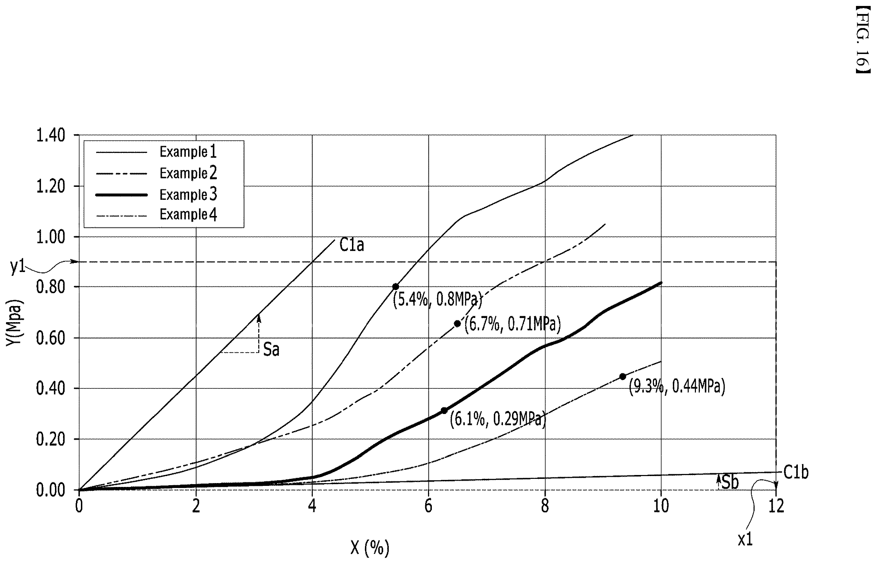

FIG. 16 is a graph showing module stiffness curves of Examples 1 to 4 according to the present disclosure.

Referring to FIG. 16, the module stiffness curves of each of Examples 1 to 4 are shown. The P-D curves of the battery cell stack are not shown, but the equilibrium point (intersection point) where each of the module stiffness curves of Examples 1 to 4 meets the P-D curve of each of the battery cell stacks of Examples 1 to 4 is displaced.

Looking at the swelling behavior of the battery module that is predicted according to the above method, it is predicted that in the EOL state, the battery module of Example 1 is deformed in the width direction by 5.4%, and the internal battery cells and module frame receive a surface pressure of 0.8 MPa. Moreover, it is predicted that in the EOL state, the battery module of Example 2 is deformed in the width direction by 6.7%, and the internal battery cells and module frame receive a surface pressure of 0.71 MPa. Further, it is predicted that in the EOL state, the battery module of Example 3 is deformed in the width direction by 6.1%, and the internal battery cells and module frame receive a surface pressure of 0.29 MPa. Finally, it is predicted that in the EOL state, the battery module of Example 4 is deformed in the width direction by 9.3%, and the internal battery cells and the module frame receive a surface pressure of 0.44 MPa.

All of the battery modules of Examples 1 to 4 exhibit the feature that in the EOL (End of Life) state, the deformation rate in the direction in which the battery cells are stacked is 12% or less, and the surface pressure applied to the battery cells is 0.9 MPa or less. Further, the module stiffness curves of the battery modules of Examples 1 to 4 are calculated in the range of slope (MPa/%) of 0.00417 or more and 0.225 or less. That is, the module stiffness curves of the battery modules of Examples 1 to 4 may be formed in a range between the lower limit module stiffness curve C1b having a slope (Sb) value of 0.00417 MPa/% and the upper limit module stiffness curve C1a having a slope (Sa) value of 0.225 MPa/%.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. For example, it can be applied to vehicle means such as an electric bike, an electric vehicle, and a hybrid electric vehicle, or an ESS (Energy Storage System) and may be applied to various devices capable of using a secondary battery, without being limited thereto.

### [Description of Reference Numerals]

100a, 100b: battery module
110: battery cell
120: battery cell stack
200: module frame
200TH: through hole
300: tube
400: thermal resin layer
500: thermal pad
600: compression pad

## Claims

1. A battery module (100a, 100b) comprising:
a battery cell stack (120) in which a plurality of battery cells (110) are stacked in one direction;
a module frame (200) that accommodates the battery cell stack (120) therein; and
a tube (300) that is stacked on one side of the battery cells (110) within the battery cell stack (120),
wherein a through hole (200TH) is formed in the module frame (200), and
wherein the tube (300) includes an injection part (310) connected to an external fluid supply device (800) via the through hole (200TH), and fluid flows into the inside of the tube (300) from the fluid supply device (800) through the injection part (310),
**characterized in that**:
the injection part (310) has a closed micro-hole shape, and
when the fluid receives pressure, the injection part (310) having a micro-hole shape is opened so that fluid flow into the inside of the tube (300), or the flowing-in fluid is discharged from the tube (300).

2. The battery module (100a, 100b) according to claim 1,
further comprising a heat transfer member located between the battery cell stack (120) and one surface of the module frame (200).

3. The battery module (100a, 100b) according to claim 1, wherein:
the heat transfer member includes a thermal resin layer (400), and
one side of the battery cells (110) are adhered to the thermal resin layer (400).

4. The battery module (100a, 100b) according to claim 3, wherein:
an injection hole (200H) is formed on the one surface of the module frame (200), and
the thermal resin layer (400) is formed by injecting a thermal resin through the injection hole (200H).

5. The battery module (100a, 100b) according to claim 2, wherein:
the heat transfer member includes a thermal pad (500), and
one side of the battery cells (110) is in contact with the thermal pad (500), with the battery cells (110) being slidable on the thermal pad (500) in the stacking direction of the battery cells (110).

6. The battery module (100a, 100b) according to claim 1,
further comprising at least one of a cooling plate (700) or a compression pad (600) disposed adjacent to the battery cell (110).

7. The battery module (100a, 100b) according to claim 1, wherein:
the battery cells (110) are stacked along one direction from the side surface part of the module frame (200) to the other side surface part,
a compression pad (600) is interposed at least at one place between adjacent battery cells (110) or between the outermost battery cell and the side surface part of the module frame (200), and
in an EOL (End of Life) state, a deformation ratio in the direction in which the battery cells (110) are stacked is 12% or less, and a surface pressure applied to the battery cells (110) is 0.9 MPa or less.

8. The battery module (100a, 100b) according to claim 7, wherein:
the module stiffness curve of the battery module (100a, 100b) is calculated in a slope (MPa/%) range of 0.00417 or more and 0.225 or less,
a module stiffness curve of the battery module (100a, 100b) corresponds to a relationship between the deformation ratio of the module frame (200) and the surface pressure applied to the module frame (200), and
the module stiffness curve of the battery module (100a, 100b) is derived by reflecting the degree of compression of the compression pads (600) relative to the surface pressure applied to the compression pads (600) and the number of the compression pads (600), on the frame stiffness curve of the module frame (200).

9. A method for manufacturing a battery module (100a, 100b), the method comprising:
an assembly step of accommodating a battery cell stack (120) in which a plurality of battery cells (110) are stacked, and a tube (300) that is stacked on one side of the battery cells (110) within the battery cell stack (120) and of which inside is empty, in the inside of the module frame (200); and
an initial pressing step of injecting a fluid into the inside of the tube (300) to press the battery cells (110),
wherein a through hole (200TH) is formed in the module frame (200),
wherein the tube (300) comprises an injection part (310) connected to an external fluid supply device (800) via the through hole (200TH), and
wherein in the initial pressing step, the fluid supply device (800) injects fluid into the inside of the tube (300) through the injection part (310),
**characterized in that**:
the injection part (310) has a closed micro-hole shape, and
when the fluid receives pressure, the injection part (310) having a micro-hole shape is opened so that fluid flows into the inside of the tube (300), or the flowing-in fluid is discharged from the tube (300).

10. The method for manufacturing a battery module (100a, 100b) according to claim 9, wherein:
the initial pressing step is performed after the assembly step.

11. The method for manufacturing a battery module (100a, 100b) according to claim 9,
further comprising a resin injection step of injecting a thermal resin between the battery cell stack (120) and one surface of the module frame (200) to form a thermal resin layer (400),
wherein an injection hole (200H) is formed on the one surface of the module frame (200), and
in the resin injection step, the thermal resin is injected through the injection hole (200H).

12. The method for manufacturing a battery module (100a, 100b) according to claim 11, wherein:
the resin injection step is performed after the initial pressing step.

13. The method for manufacturing a battery module according to claim 9, wherein:
in the assembly step, a thermal pad (500) is accommodated inside the module frame (200),
the thermal pad (500) is located between the battery cell stack (120) and one surface of the module frame (200), and
one side of the battery cells (110) is in contact with the thermal pad (500), with the battery cells (110) being slidable on the thermal pad (500) in the stacking direction of the battery cells (110).

## Patentansprüche

1. Batteriemodul (100a, 100b), umfassend:
einen Batteriezellenstapel (120), in welchem eine Mehrzahl von Batteriezellen (110) in einer Richtung gestapelt sind;
einen Modulrahmen (200), welcher den Batteriezellenstapel (120) darin aufnimmt; und
einen Schlauch (300), welcher an einer Seite der Batteriezellen (110) innerhalb des Batteriezellenstapels (120) gestapelt ist,
wobei ein Durchgangsloch (200TH) in dem Modulrahmen (200) gebildet ist, und
wobei der Schlauch (300) einen Injizierteil (310) umfasst, welcher mittels des Durchgangslochs (200TH) mit einer externen Fluid-Zuführvorrichtung (800) verbunden ist, und wobei ein Fluid von der Fluid-Zuführvorrichtung (800) durch den Injizierteil (310) in das Innere des Schlauchs (300) strömt,
**dadurch gekennzeichnet, dass**:
der Injizierteil (310) eine geschlossene Mikrolochform aufweist, und
wenn das Fluid einen Druck erfährt, der Injizierteil (310), welcher eine Mikrolochform aufweist, geöffnet wird, so dass Fluid in das Innere des Schlauchs (300) strömt, oder das einströmende Fluid aus dem Schlauch (300) abgeführt wird.

2. Batteriemodul (100a, 100b) nach Anspruch 1,
ferner umfassend ein Wärmeübertragungselement, welches zwischen dem Batteriezellenstapel (120) und einer Fläche des Modulrahmens (200) angeordnet ist.

3. Batteriemodul (100a, 100b) nach Anspruch 1, wobei:
das Wärmeübertragungselement eine thermische Harzschicht (400) umfasst, und
eine Seite der Batteriezellen (110) an der thermischen Harzschicht (400) anhaftet.

4. Batteriemodul (100a, 100b) nach Anspruch 3, wobei:
ein Injizierloch (200H) an der einen Seite des Modulrahmens (200) gebildet ist, und
die thermische Harzschicht (400) durch Injizieren eines thermischen Harzes durch das Injizierloch (200H) gebildet ist.

5. Batteriemodul (100a, 100b) nach Anspruch 2, wobei:
das Wärmeübertragungselement eine thermische Unterlage (500) umfasst, und
eine Seite der Batteriezellen (110) in Kontakt mit der thermischen Unterlage (500) ist, wobei die Batteriezellen (110) an der thermischen Unterlage (500) in der Stapelrichtung der Batteriezellen (110) gleitbar sind.

6. Batteriemodul (100a, 100b) nach Anspruch 1,
ferner umfassend wenigstens eine Kühlplatte (700) oder eine Kompressionsunterlage (600), welche benachbart zu der Batteriezelle (110) angeordnet sind.

7. Batteriemodul (100a, 100b) nach Anspruch 1, wobei:
die Batteriezellen (110) entlang einer Richtung von dem Seitenflächenteil des Modulrahmens (200) zu dem anderen Seitenflächenteil gestapelt sind,
eine Kompressionsunterlage (600) wenigstens an einer Stelle zwischen benachbarten Batteriezellen (110) oder zwischen der äußersten Batteriezelle und dem Seitenflächenteil des Modulrahmens (200) eingefügt ist, und
in einem EOL-(Lebensende)-Zustand, ein Deformationsverhältnis in der Richtung, in welcher die Batteriezellen (110) gestapelt sind, 12 % oder weniger beträgt, und ein Flächendruck, welcher auf die Batteriezellen (110) ausgeübt wird, 0,9 MPa oder weniger beträgt.

8. Batteriemodul (100a, 100b) nach Anspruch 7, wobei:
die Modul-Steifigkeitskurve des Batteriemoduls (100a, 100b) in einem Steigung-(MPa/%)-Bereich von 0,00417 oder mehr und 0,225 oder weniger berechnet wird,
eine Modul-Steifigkeitskurve des Batteriemoduls (100a,100b) einer Beziehung zwischen dem Deformationsverhältnis des Modulrahmens (200) und eines Flächendrucks entspricht, welcher auf den Modulrahmen (200) ausgeübt wird, und
die Modul-Steifigkeitskurve des Batteriemoduls (100a, 100b) durch Wiedergeben des Kompressionsgrads der Kompressionsunterlage (600) relativ zu dem Flächendruck, welcher auf die Kompressionsunterlage (600) ausgeübt wird, und der Anzahl an Kompressionsunterlagen (600) an der Rahmen-Steifigkeitskurve des Modulrahmens (200) abgeleitet wird.

9. Verfahren zum Herstellen eines Batteriemoduls (100a, 100b), wobei das Verfahren umfasst:
einen Montageschritt eines Aufnehmens eines Batteriezellenstapels (120), in welchem eine Mehrzahl von Batteriezellen (110) gestapelt sind, und eines Schlauchs (300), welcher an einer Seite der Batteriezellen (110) innerhalb des Batteriezellenstapels (120) gestapelt ist und dessen Inneres leer ist, in dem Inneren des Modulrahmens (200); und
einen initialen Pressschritt eines Injizierens eines Fluids in das Innere des Schlauchs (300), um die Batteriezellen (110) zu pressen,
wobei ein Durchgangsloch (200TH) in dem Modulrahmen (200) gebildet ist,
wobei der Schlauch (300) einen Injizierteil (310) umfasst, welcher mittels des Durchgangslochs (200TH) mit einer externen Fluid-Zuführvorrichtung (800) verbunden ist, und
wobei, in dem initialen Pressschritt, ein Fluid von der Fluid-Zuführvorrichtung (800) durch den Injizierteil (310) in das Innere des Schlauchs (300) injiziert wird,
**dadurch gekennzeichnet, dass**:
der Injizierteil (310) eine geschlossene Mikrolochform aufweist, und
wenn das Fluid einen Druck erfährt, der Injizierteil (310), welcher eine Mikrolochform aufweist, geöffnet wird, so dass Fluid in das Innere des Schlauchs (300) strömt, oder das einströmende Fluid aus dem Schlauch (300) abgeführt wird.

10. Verfahren zum Herstellen eines Batteriemoduls (100a, 100b) nach Anspruch 9, wobei:
der initiale Pressschritt nach dem Montageschritt durchgeführt wird.

11. Verfahren zum Herstellen eines Batteriemoduls (100a, 100b) nach Anspruch 9,
ferner umfassend einen Harz-Injizierschritt eines Injizierens eines thermischen Harzes zwischen den Batteriezellenstapel (120) und eine Fläche des Modulrahmens (200), um eine thermische Harzschicht (400) zu bilden,
wobei ein Injizierloch (200H) an der einen Fläche des Modulrahmens (200) gebildet ist, und
in dem Harz-Injizierschritt, das thermische Harz durch das Injizierloch (200H) injiziert wird.

12. Verfahren zum Herstellen eines Batteriemoduls (100a, 100b) nach Anspruch 11, wobei:
der Harz-Injizierschritt nach dem initialen Pressschritt durchgeführt wird.

13. Verfahren zum Herstellen eines Batteriemoduls nach Anspruch 9, wobei:
in dem Montageschritt, eine thermische Unterlage (500) in dem Modulrahmen (200) aufgenommen ist,
die thermische Unterlage (500) zwischen dem Batteriezellenstapel (120) und einer Fläche des Modulrahmens (200) angeordnet ist, und
eine Seite der Batteriezellen (110) in Kontakt mit der thermischen Unterlage (500) ist, wobei die Batteriezellen (110) an der thermischen Unterlage (500) in der Stapelrichtung der Batteriezellen (110) gleitbar sind.

## Revendications

1. Module de batterie (100a, 100b) comprenant :
un empilement d'éléments de batterie (120) dans lequel une pluralité d'éléments de batterie (110) sont empilés dans une direction ;
un boitier de module (200) qui reçoit l'empilement d'éléments de batterie (120) à l'intérieur de celui-ci ; et
un tube (300) qui est empilé sur un côté des éléments de batterie (110) à l'intérieur de l'empilement d'éléments de batterie (120),
dans lequel un trou traversant (200TH) est formé dans le boitier de module (200), et
dans lequel le tube (300) comporte une partie d'injection (310) reliée à un dispositif d'alimentation en fluide (800) externe par l'intermédiaire du trou traversant (200TH),
et du fluide s'écoule à l'intérieur du tube (300) à partir du dispositif d'alimentation en fluide (800) à travers la partie d'injection (310),
**caractérisé en ce que** :
la partie d'injection (310) présente une forme de micro-trou fermée, et
lorsque le fluide reçoit une pression, la partie d'injection (310) présentant une forme de micro-trou est ouverte de sorte que du fluide s'écoule à l'intérieur du tube (300), ou que le fluide entrant soit évacué du tube (300).

2. Module de batterie (100a, 100b) selon la revendication 1,
comprenant en outre un organe de transfert de chaleur situé entre l'empilement d'éléments de batterie (120) et une surface du boitier de module (200).

3. Module de batterie (100a, 100b) selon la revendication 1, dans lequel :
l'organe de transfert de chaleur comporte une couche de résine thermique (400), et
un côté des éléments de batterie (110) est collé à la couche de résine thermique (400).

4. Module de batterie (100a, 100b) selon la revendication 3, dans lequel :
un trou d'injection (200H) est formé sur la une surface du boitier de module (200), et
la couche de résine thermique (400) est formée par injection d'une résine thermique à travers le trou d'injection (200H).

5. Module de batterie (100a, 100b) selon la revendication 2, dans lequel :
l'organe de transfert de chaleur comporte un tampon thermique (500), et
un côté des éléments de batterie (110) est en contact avec le tampon thermique (500), les éléments de batterie (110) étant coulissants sur le tampon thermique (500) dans la direction d'empilement des éléments de batterie (110).

6. Module de batterie (100a, 100b) selon la revendication 1,
comprenant en outre au moins l'une parmi une plaque de refroidissement (700) ou un tampon de compression (600) disposé(e) adjacent(e) à l'élément de batterie (110).

7. Module de batterie (100a, 100b) selon la revendication 1, dans lequel :
les éléments de batterie (110) sont empilés le long d'une direction depuis la partie de surface latérale du boitier de module (200) vers l'autre partie de surface latérale,
un tampon de compression (600) est interposé au moins à un endroit entre des éléments de batterie (110) adjacents ou entre l'élément de batterie le plus extérieur et la partie de surface latérale du boitier de module (200), et
dans un état de fin de vie (EOL), un rapport de déformation dans la direction dans laquelle les éléments de batterie (110) sont empilés est de 12 % ou moins, et une pression de surface appliquée aux éléments de batterie (110) est de 0,9 MPa ou moins.

8. Module de batterie (100a, 100b) selon la revendication 7, dans lequel :
la courbe de rigidité de module du module de batterie (100a, 100b) est calculée dans une plage de pente (MPa/%) de 0,00417 ou plus et de 0,225 ou moins,
une courbe de rigidité de module du module de batterie (100a, 100b) correspond à une relation entre le rapport de déformation du boitier de module (200) et la pression de surface appliquée au boitier de module (200), et
la courbe de rigidité de module du module de batterie (100a, 100b) est obtenue en reflétant le degré de compression des tampons de compression (600) par rapport à la pression de surface appliquée aux tampons de compression (600) et le nombre de tampons de compression (600), sur la courbe de rigidité de boitier du boitier de module (200).

9. Procédé de fabrication d'un module de batterie (100a, 100b), le procédé comprenant :
une étape d'assemblage consistant à recevoir un empilement d'éléments de batterie (120) dans lequel une pluralité d'éléments de batterie (110) sont empilés, et un tube (300) qui est empilé sur un côté des éléments de batterie (110) à l'intérieur de l'empilement d'éléments de batterie (120) et dont l'intérieur est vide, à l'intérieur du boitier de module (200) ; et
une étape de pressage initial consistant à injecter un fluide à l'intérieur du tube (300) pour presser les éléments de batterie (110),
dans lequel un trou traversant (200TH) est formé dans le boitier de module (200), dans lequel le tube (300) comprend une partie d'injection (310) reliée à un dispositif d'alimentation en fluide (800) externe par l'intermédiaire du trou traversant (200TH), et
dans lequel, dans l'étape de pressage initial, le dispositif d'alimentation en fluide (800) injecte du fluide à l'intérieur du tube (300) à travers la partie d'injection (310), **caractérisé en ce que** :
la partie d'injection (310) présente une forme de micro-trou fermée, et
lorsque le fluide reçoit une pression, la partie d'injection (310) présentant une forme de micro-trou est ouverte de sorte que du fluide s'écoule à l'intérieur du tube (300), ou que le fluide entrant soit évacué du tube (300).

10. Procédé de fabrication d'un module de batterie (100a, 100b) selon la revendication 9, dans lequel :
l'étape de pressage initial est réalisée après l'étape d'assemblage.

11. Procédé de fabrication d'un module de batterie (100a, 100b) selon la revendication 9,
comprenant en outre une étape d'injection de résine consistant à injecter une résine thermique entre l'empilement d'éléments de batterie (120) et une surface du boitier de module (200) pour former une couche de résine thermique (400),
dans lequel un trou d'injection (200H) est formé sur une surface du boitier de module (200), et
dans l'étape d'injection de résine, la résine thermique est injectée à travers le trou d'injection (200H).

12. Procédé de fabrication d'un module de batterie (100a, 100b) selon la revendication 11, dans lequel :
l'étape d'injection de résine est réalisée après l'étape de pressage initial.

13. Procédé de fabrication d'un module de batterie selon la revendication 9, dans lequel :
dans l'étape d'assemblage, un tampon thermique (500) est reçu à l'intérieur du boitier de module (200),
le tampon thermique (500) est situé entre l'empilement d'éléments de batterie (120) et une surface du boitier de module (200), et
un côté des éléments de batterie (110) est en contact avec le tampon thermique (500), les éléments de batterie (110) étant coulissants sur le tampon thermique (500) dans la direction d'empilement des éléments de batterie (110).
